# EUROPEAN PATENT APPLICATION

(11) **EP 4 614 110 A1**
(43) Date of publication of application: **10.09.2025**
(21) Application number: 25161696.7
(22) Date of filing: 04.03.2025
(51) Int. Cl.: G01C 15/00, G01S 7/481, G01S 7/497, G01S 17/42, G01S 17/89

(54) **THREE-DIMENSIONAL SURVEYING DEVICE**

(30) Priority: 07.03.2024 JP 2024035000
(71) Applicant: TOPCON CORPORATION, Tokyo 174-8580 (JP)
(72) Inventor: SASAKI, Yo, Itabashi-ku, 174-8580 (JP); SUGIMOTO, Hiroaki, Itabashi-ku, 174-8580 (JP)
(74) Representative: Mewburn Ellis LLP

(57) **Abstract**

Provided is a three-dimensional surveying device in which ranging precision of scanning can be improved.

A three-dimensional surveying device includes a light source unit that discharges a ranging light, a projected light optical unit that emits the ranging light onto a ranging optical axis, a scanning mirror that performs rotational emission of the ranging light in a plane that intersects a rotation shaft, a light-receiving optical unit that receives reflected ranging light reflected at the measurement object and guided by the scanning mirror, a reference light optical unit that receives and also reflects the ranging light reflected at the scanning mirror as the internal reference light, and that is capable of changing quantity of light of the internal reference light, and a photoreceptor that receives the reflected ranging light and the internal reference light. The reference light optical unit has a concentration-gradient-imparted filter in which optical concentration of a region through which the internal reference light is transmitted changes along a scanning line of the internal reference light, and a reflecting sheet that performs retroreflection of the internal reference light transmitted through the concentration-gradient-imparted filter.

## Description

### BACKGROUND OF THE INVENTION

### 1. Field of the Invention

Aspects of the technology described herein relate to a three-dimensional surveying device that acquires three-dimensional data of a measurement object, by emitting ranging light to the measurement object to measure distance to the measurement object, and also detecting emission direction of the ranging light.

### 2. Description of the Related Art

Japanese Patent No. 6953233 discloses a three-dimensional surveying device that acquires three-dimensional data (three-dimensional point cloud data) of a great number of points of a measurement object. The three-dimensional surveying device described in Japanese Patent No. 6953233 emits a pulsed laser beam as ranging light to the measurement object, and receives reflected light for each pulsed laser reflected at the measurement object. The three-dimensional surveying device then acquires three-dimensional data of the measurement object, by measuring distance to the measurement object on the basis of the reflected light that is received, and internal reference light, and also by detecting emission direction (horizontal angle and vertical angle) of the ranging light.

The three-dimensional surveying device described in Japanese Patent No. 6953233 uses a correction method called "range walk correction", for example, so as to correct distance values that are measured, in accordance with quantity of light of the reflected ranging light, thereby suppressing error in the distance values that are measured. Specifically, the three-dimensional surveying device emits a laser beam toward a concentration-gradient-imparted filter and a reflective sheet installed at a lower portion of a scan unit, before starting acquisition operations of three-dimensional data (i.e., scanning operations). The three-dimensional surveying device then rotates the concentration-gradient-imparted filter, which is circularly shaped, thereby changing the quantity of light being transmitted through the concentration-gradient-imparted filter (i.e., internal reference light), and acquires a table of correction values in accordance with the quantity of light with respect to a known distance. Thereafter, the three-dimensional surveying device starts scanning operations, and corrects the distance value in accordance with the quantity of light of the ranging light reflected at the measurement object (i.e., reflected ranging light), by using the table of correction values in accordance with the quantity of light.

Now, the correction value may change in accordance with, for example, a warmup state of the three-dimensional surveying device, for example. Accordingly, the three-dimensional surveying device updates a correction value for offsetting the correction value at a timing of the laser beam being transmitted through the concentration-gradient-imparted filter during scanning operations. However, the three-dimensional surveying device described in Japanese Patent No. 6953233 does not perform reacquisition of the table of correction values in accordance with the quantity of light during scanning operations. Accordingly, the three-dimensional surveying device has room for improvement with respect to the point of improving ranging precision of scanning.

### SUMMARY OF THE INVENTION

The present invention has been made in consideration of the foregoing circumstances, and an object thereof is to provide a three-dimensional surveying device in which ranging precision of scanning can be improved.

Some embodiments provide for three-dimensional surveying device, the three-dimensional surveying device that emits ranging light to a measurement object and measures a distance to the measurement object on the basis of reflected ranging light that is the ranging light reflected at the measurement object and of internal reference light, and also detects an emission direction of the ranging light, thereby acquiring three-dimensional data of the measurement object. The three-dimensional surveying device includes: a light source unit that discharges the ranging light; a projected light optical unit that emits the ranging light discharged from the light source unit onto a ranging optical axis; a scanning mirror that is provided so as to be capable of rotating about a rotation shaft in a state of being inclined as to a shaft center of the rotation shaft, and that performs rotational emission of the ranging light guided from the projected light optical unit in a plane that intersects the rotation shaft; a light-receiving optical unit that receives the reflected ranging light reflected at the measurement object and guided by the scanning mirror; a reference light optical unit that, out of an emission range in which rotational emission of the ranging light is performed by the scanning mirror, is provided in a range other than a measurement range in which the ranging light is emitted to the measurement object, and that receives and also reflects the ranging light reflected at the scanning mirror as the internal reference light, and that is capable of changing quantity of light of the internal reference light to be reflected; and a photoreceptor that receives the reflected ranging light and the internal reference light guided from the reference light optical unit. The reference light optical unit has a concentration-gradient-imparted filter in which optical concentration of a region through which the internal reference light is transmitted changes along a scanning line of the internal reference light, and a reflecting sheet that performs retroreflection of the internal reference light transmitted through the concentration-gradient-imparted filter.

According to the three-dimensional surveying device of the present invention, the reference light optical unit that receives and also reflects the ranging light reflected at the scanning mirror as the internal reference light is provided in a range other than the measurement range out of the emission range of ranging light. The emission range is the range in which rotational emission of the ranging light is performed by the scanning mirror. The measurement range is the range in which the ranging light is emitted to the measurement object. The reference light optical unit also has the concentration-gradient-imparted filter in which optical concentration of the region through which the internal reference light is transmitted changes along the scanning line of the internal reference light, and is capable of changing the quantity of light of the internal reference light that is reflected. Accordingly, the internal reference light is transmitted through all optical concentrations of the concentration-gradient-imparted filter that changes along the scanning line of the internal reference light, each time the scanning mirror makes one rotation during scanning operations, i.e., each time rotational emission of the ranging light is performed by the scanning mirror during scanning operations. Accordingly, the three-dimensional surveying device according to the present invention can acquire a table of correction values in accordance with the quantity of light, each time the scanning mirror makes one rotation during scanning operations. Hence, the three-dimensional surveying device according to the present invention can perform correction of measured distance values in accordance with the quantity of light of the reflected ranging light, using a refined table each time the scanning mirror makes one rotation, and thereby improve ranging precision of scanning.

In the three-dimensional surveying device according to the present invention, preferably, a surface of the concentration-gradient-imparted filter through which the internal reference light is transmitted is a flat plane.

According to the three-dimensional surveying device of the present invention, simplification of the structure and reduction in size of the concentration-gradient-imparted filter can be performed. Thus, simplification of the structure and reduction in size of the three-dimensional surveying device can be performed.

In the three-dimensional surveying device according to the present invention, preferably, a gradient of the optical concentration on the flat plane changes in accordance with a distance between a portion where the ranging light is reflected at the scanning mirror, and a portion where the internal reference light is transmitted through the surface.

According to the three-dimensional surveying device of the present invention, the gradient of the optical concentration on the flat plane of the concentration-gradient-imparted filter changes in accordance with the distance between the portion where the ranging light is reflected at the scanning mirror, and the portion where the internal reference light is transmitted through the surface of the concentration-gradient-imparted filter. Accordingly, the rectilinearity or the linearity of the table of correction values in accordance with the quantity of light can be improved.

In the three-dimensional surveying device according to the present invention, preferably, a surface of the concentration-gradient-imparted filter through which the internal reference light is transmitted is a spherical face in which a distance between a portion where the ranging light is reflected at the scanning mirror, and a portion where the internal reference light is transmitted through the surface, is constant.

According to the three-dimensional surveying device of the present invention, the surface of the concentration-gradient-imparted filter through which internal reference light is transmitted is the spherical face in which the distance between the portion where the ranging light is reflected at the scanning mirror, and the portion where the internal reference light is transmitted through the surface of the concentration-gradient-imparted filter, is constant. Accordingly, the rectilinearity or the linearity of the table of correction values in accordance with the quantity of light can be improved.

In the three-dimensional surveying device according to the present invention, preferably, a gradient of the optical concentration on the spherical face is constant.

According to the three-dimensional surveying device of the present invention, the rectilinearity or the linearity of the table of correction values in accordance with the quantity of light can be improved even further.

In the three-dimensional surveying device according to the present invention, preferably, the optical concentration has a gradient in which quantity of light of the internal reference light that is transmitted through the concentration-gradient-imparted filter gradually increases in a scanning direction of the internal reference light.

According to the three-dimensional surveying device of the present invention, the optical concentration of the concentration-gradient-imparted filter has the gradient in which the quantity of light of the internal reference light that is transmitted through the concentration-gradient-imparted filter gradually increases in the scanning direction of the internal reference light. Accordingly, a situation in which a relatively great quantity of light of the internal reference light enters the photoreceptor at an initial stage of the internal reference light being transmitted through the concentration-gradient-imparted filter can be suppressed, and a situation in which a relatively great quantity of light is retained in circuits such as the control computing unit can be suppressed. Thus, precision of the table of correction values in accordance with the quantity of light can be improved and ranging precision of scanning can be improved in the three-dimensional surveying device according to the present invention.

In the three-dimensional surveying device according to the present invention, preferably, the optical concentration has a gradient in which quantity of light of the internal reference light that is transmitted through the concentration-gradient-imparted filter gradually increases in a scanning direction of the internal reference light, and thereafter decreases.

According to the three-dimensional surveying device of the present invention, the optical concentration of the concentration-gradient-imparted filter has the gradient in which quantity of light of the internal reference light that is transmitted through the concentration-gradient-imparted filter gradually increases in the scanning direction of the internal reference light, and thereafter decreases. Accordingly, a situation in which a relatively great quantity of light of the internal reference light enters the photoreceptor at an initial stage of the internal reference light being transmitted through the concentration-gradient-imparted filter can be suppressed, and a situation in which a relatively great quantity of light is retained in circuits such as the control computing unit can be suppressed. Further, a situation in which a relatively great quantity of light of the internal reference light enters the photoreceptor at a latter stage of the internal reference light being transmitted through the concentration-gradient-imparted filter can be suppressed, and a situation in which a relatively great quantity of light is retained in circuits such as the control computing unit can be suppressed. Thus, when the scanning mirror emits the ranging light serving as the internal reference light to the reference light optical unit in the subsequent rotation, a situation in which a relatively great quantity of light remains retained in circuits such as the control computing unit can be suppressed. Accordingly, in the three-dimensional surveying device of the present invention, precision of the table of correction values in accordance with the quantity of light can be improved even further, and ranging precision of scanning can be improved even further.

According to the present invention, a three-dimensional surveying device can be provided in which ranging precision of scanning can be improved.
The foregoing is non-limiting summary of the invention, which is defined by the attached claims.

### BRIEF DESCRIPTION OF THE DRAWINGS

Various aspects and embodiments of the application will be described with reference to the following figures. Items appearing in multiple figures are indicated by the same or a similar reference number in all the figures in which they appear.
FIG. 1 is a block diagram illustrating a three-dimensional surveying device according to an embodiment of the present invention;
FIG. 2 is a block diagram for describing a control system of the three-dimensional surveying device according to the embodiment;
FIG. 3 is a diagram for describing a reference light optical unit according to the embodiment;
FIG. 4 is a diagram for describing a reference light optical unit of a three-dimensional surveying device according to a comparative example of the embodiment;
FIG. 5 is a graph exemplifying an example of a relation between quantity of light and correction values;
FIG. 6 is a schematic diagram for describing a concentration-gradient-imparted filter according to a first specific example;
FIG. 7 is a plan view for describing the concentration-gradient-imparted filter according to the first specific example;
FIG. 8 is a plan view for describing a concentration-gradient-imparted filter according to a second specific example;
FIG. 9 is a schematic diagram for describing a concentration-gradient-imparted filter according to a third specific example;
FIG. 10 is a plan view for describing the concentration-gradient-imparted filter according to the third specific example; and
FIG. 11 is a flowchart exemplifying distance calculation processing of the three-dimensional surveying device according to the embodiment.

### DESCRIPTION OF THE PREFERRED EMBODIMENTS

A preferred embodiment of the present invention will be described in detail below with reference to the drawings. Note that the embodiment described below is a preferred specific example of the present invention, and accordingly various types of restrictions that are technically preferable are applied, but the scope of the present invention is not limited to these forms unless specifically stated in the following description that the present invention is to be limited. It should also be noted that in the drawings, components that are the same are denoted by the same signs, and detailed description will be omitted as appropriate.

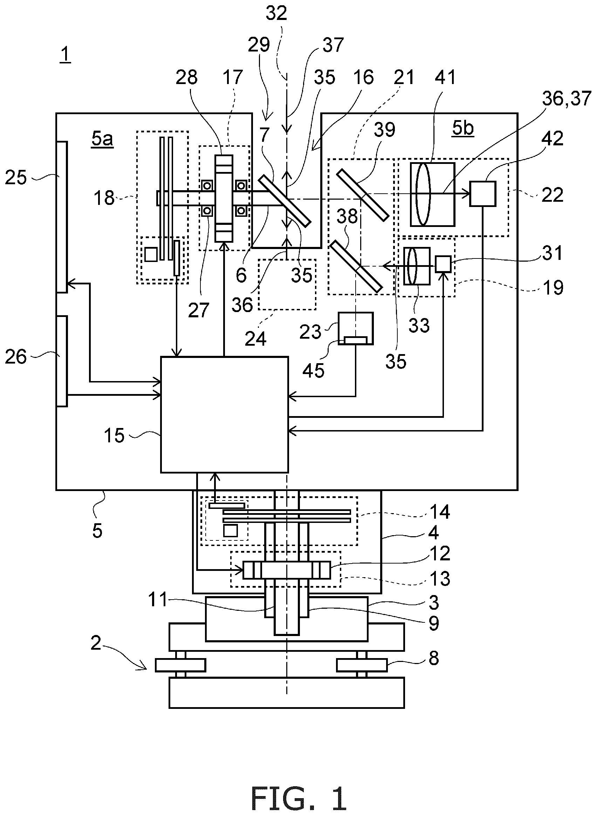

FIG. 1 is a block diagram illustrating a three-dimensional surveying device according to an embodiment of the present invention. Description of the present embodiment will be made by way of an example of a case in which the three-dimensional surveying device is a three-dimensional laser scanner.

As illustrated in FIG. 1, a three-dimensional surveying device 1 includes a tribrach unit 2 that is attached to a tripod (omitted from illustration), a base portion 3 that is provided on the tribrach unit 2, a frame unit 5 that provided on the base portion 3, with a horizontal rotation unit 4 interposed therebetween, so as to be rotatable in a horizontal direction, and a scanning mirror 7 that is provided to the frame unit 5 so as to be rotatable in a vertical direction (high-low direction) about a vertical rotation shaft 6.

The tribrach unit 2 has three adjusting screws 8, for example. Leveling by the tribrach unit 2 is performed by the adjusting screws 8 being adjusted such that a tilt sensor (omitted from illustration) provided to the frame unit 5 detects a horizontal state.

The horizontal rotation unit 4 has a horizontal rotation shaft 11 that is rotatably provided to the base portion 3 through a bearing 9 and that is vertically supported. The frame unit 5 is supported by the horizontal rotation shaft 11, and integrally rotates with the horizontal rotation shaft 11.

A horizontal drive portion 13 that includes a horizontal drive motor 12, and a horizontal angle detector (e.g., encoder) 14 that detects a rotational angle of the horizontal rotation shaft 11, are accommodated in the horizontal rotation unit 4. The frame unit 5 rotates about the horizontal rotation shaft 11 under drive force transmitted from the horizontal drive motor 12. The rotational angle of the horizontal rotation shaft 11 with respect to the base portion 3 (i.e., rotational angle of the frame unit 5) is detected by the horizontal angle detector 14.

Detection results of the horizontal angle detector 14 (horizontal angle) are input to a control computing unit 15. Driving by the horizontal drive motor 12 is controlled by the control computing unit 15 on the basis of the detection result of the horizontal angle detector 14.

A recessed portion 16 is formed in the middle portion of the frame unit 5. A first chamber 5a and a second chamber 5b are formed on either side of the recessed portion 16. A vertical drive portion 17 and a vertical angle detector 18 are accommodated in the first chamber 5a (chamber to left side in FIG. 1). A ranging light generating portion 19, a common optical path portion 21, a ranging unit 22, an image-capturing unit 23, and a reference light optical unit 24 are accommodated in the second chamber 5b (chamber to right side in FIG. 1). The control computing unit 15 is accommodated at a suitable position within the frame unit 5. Also, a display unit 25 and an operating unit 26 are provided to a suitable portion of the frame unit 5.

The vertical rotation shaft 6 has a shaft center that extends horizontally, and is rotationally supported by the frame unit 5 through a bearing 27. One end portion of the vertical rotation shaft 6 protrudes into the recessed portion 16. The scanning mirror 7 is provided on the one end portion of the vertical rotation shaft 6 that protrudes into the recessed portion 16, and is inclined by 45° with respect to the shaft center of the vertical rotation shaft 6. The scanning mirror 7 is supported by the vertical rotation shaft 6 within the recessed portion 16 and is rotatable in the vertical direction about the vertical rotation shaft 6.

The vertical drive portion 17 has a vertical drive motor 28 that rotates the vertical rotation shaft 6. The scanning mirror 7 rotates under drive force transmitted from the vertical drive motor 28 through the vertical rotation shaft 6. A scanning portion 29 according to the present embodiment has the vertical rotation shaft 6, the scanning mirror 7, and the vertical drive motor 28.

The vertical angle detector 18 (e.g., incremental encoder) is provided on the other end portion of the vertical rotation shaft 6. A rotational angle of the vertical rotation shaft 6 with respect to the frame unit 5 is detected by the vertical angle detector 18. Detection results (vertical angle) of the vertical angle detector 18 are input to the control computing unit 15. Driving of the vertical drive motor 28 is controlled by the control computing unit 15 on the basis of the detection result of the vertical angle detector 18.

The ranging light generating portion 19 has a ranging light source unit 31, and a projected light optical unit 33 that includes an objective lens. The ranging light source unit 31 is, for example, a semiconductor laser, and discharges ranging light 35 onto a ranging optical axis 32. The ranging light 35 according to the present embodiment is a pulsed laser beam of infrared light that is non-visible light. The ranging light source unit 31 generates pulsed light in a suitable state, including a suitable light intensity, a suitable pulse interval, under control of the control computing unit 15.

The common optical path portion 21 has a first beam splitter 38 and a second beam splitter 39. The ranging unit 22 has a light-receiving optical unit 41 including condensing lens and a photoreceptor 42. The photoreceptor 42 receives reflected ranging light 37 that is the ranging light 35 reflected at a measurement object (omitted from illustration), and that has been transmitted through the light-receiving optical unit 41, and converts the reflected ranging light 37 into electrical signals. The photoreceptor 42 also receives internal reference light 36 guided from the reference light optical unit 24, and converts the internal reference light 36 into electrical signals. Examples of the photoreceptor 42 include an avalanche photodiode.

That is to say, the ranging light 35 output from the ranging light source unit 31 is guided to the common optical path portion 21 through the projected light optical unit 33. The ranging light 35 guided to the common optical path portion 21 is sequentially reflected at the first beam splitter 38 and the second beam splitter 39, and is guided to the scanning mirror 7. Note that the ranging light 35 that has been transmitted through the first beam splitter 38 and the second beam splitter 39 is absorbed by a reflection preventing member that is omitted from illustration.

The scanning mirror 7 is a deflecting optical member, and reflects the ranging light 35 that enters from the horizontal direction at a right angle. Also, the scanning mirror 7 reflects the reflected ranging light 37 and the internal reference light 36 that enter the scanning mirror 7 in the horizontal direction toward the second beam splitter 39.

The ranging light 35 that is guided from the common optical path portion 21 to the scanning mirror 7 is reflected at the scanning mirror 7, and is emitted to the measurement object. Also, the ranging light 35 that is guided from the common optical path portion 21 to the scanning mirror 7 is reflected at the scanning mirror 7 and is emitted onto the reference light optical unit 24 as the internal reference light 36. That is to say, within a measurement range of an emission range of the ranging light 35, the ranging light 35 is reflected at the scanning mirror 7, and is emitted to the measurement object. Conversely, in a range other than the measurement range of the emission range of the ranging light 35, the ranging light 35 is reflected at the scanning mirror 7, and is received and reflected by the reference light optical unit 24 as the internal reference light 36. That is to say, the reference light optical unit 24 is provided in a range other than the measurement range of the emission range of the ranging light 35. The internal reference light 36 is light that is part of the ranging light 35, and that is received and reflected by the reference light optical unit 24. In the present application, the term "emission range" means a range over which the ranging light 35 is rotationally emitted by the scanning mirror 7. Also, the term "measurement range" means a range in which the ranging light 35 is emitted to the measurement object.

When the scanning mirror 7 is rotated about the vertical rotation shaft 6, the ranging light 35 is rotationally emitted within a plane that intersects the vertical rotation shaft 6 (within a vertical plane in the present embodiment). Also, when the frame unit 5 is rotated in the horizontal direction by the horizontal rotation unit 4, the ranging light 35 is rotationally emitted in the horizontal direction about the horizontal rotation shaft 11. Accordingly, the three-dimensional surveying device 1 can scan the entire measurement region by the ranging light 35, through collaboration of the vertical-direction rotation of the scanning mirror 7 and the horizontal-direction rotation of the frame unit 5.

The reflected ranging light 37 reflected at the measurement object that is present within the measurement range enters the scanning mirror 7. The reflected ranging light 37 that has entered the scanning mirror 7 is reflected at the scanning mirror 7, and enters the common optical path portion 21. The reflected ranging light 37 is transmitted through the second beam splitter 39, and is guided to the ranging unit 22. Also, the internal reference light 36 that is reflected at the reference light optical unit 24 provided in a range outside of the measurement range enters the scanning mirror 7. The internal reference light 36 that has entered the scanning mirror 7 is reflected at the scanning mirror 7, and enters the common optical path portion 21. The internal reference light 36 is transmitted through the second beam splitter 39, and is guided to the ranging unit 22.

The photoreceptor 42 of the ranging unit 22 receives the reflected ranging light 37 reflected at the measurement object, and the internal reference light 36 reflected at the reference light optical unit 24, through the light-receiving optical unit 41. At the photoreceptor 42, the reflected ranging light 37 and the internal reference light 36 are respectively converted into reflected ranging light electrical signals and internal reference light electrical signals, and are sent to the control computing unit 15. Distance to the measurement object is measured on the basis of difference in timewise intervals between the reflected ranging light electrical signals and the internal reference light electrical signals.

The control computing unit 15 calculates a coordinates value of the measurement object on the basis of the distance to the measurement object that is measured, the vertical angle that is detected by the vertical angle detector 18, and the horizontal angle that is detected by the horizontal angle detector 14. The control computing unit 15 also records the coordinate value of the measurement object for each pulsed light, and thereby can obtain point cloud data relating to the entire measurement range, or point cloud data relating to the measurement object. An angle detection portion that detects a direction of the ranging optical axis 32 has the horizontal angle detector 14 and the vertical angle detector 18. That is to say, an emission direction of the ranging light 35 is detected by the angle detection portion that has the horizontal angle detector 14 and the vertical angle detector 18.

An image-capturing device 45 is provided on an image-capturing optical axis of the image-capturing unit 23. The image-capturing device 45 has a set of pixels, and outputs digital image signals. Examples of the image-capturing device 45 include a charge-coupled device (CCD), a complementary metal-oxide semiconductor (CMOS) sensor. Positions in the image-capturing device 45 of each of the pixels of the image-capturing device 45 are identifiable.

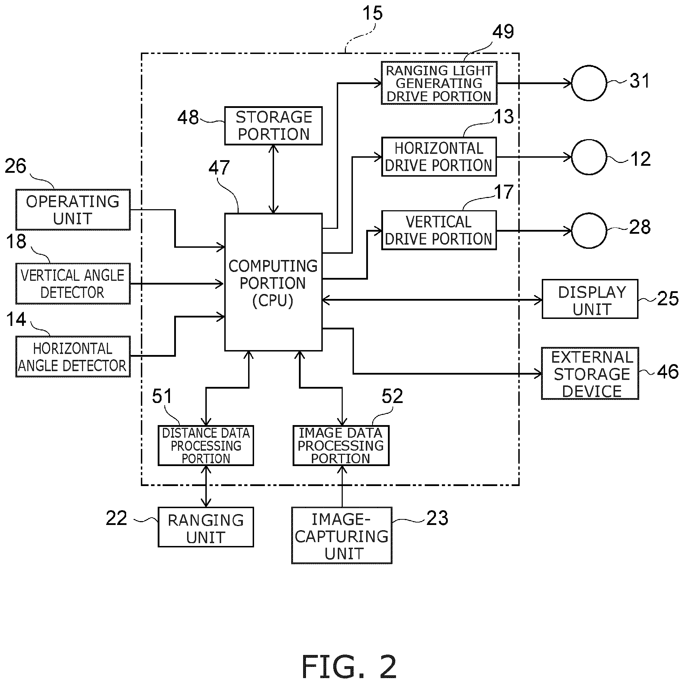

FIG. 2 is a block diagram for describing a control system of the three-dimensional surveying device according to the present embodiment. The operating unit 26, the vertical angle detector 18, and the horizontal angle detector 14 are electrically connected to the control computing unit 15. Angle detection signals output from each of the vertical angle detector 18 and the horizontal angle detector 14 are input to the control computing unit 15, and also operation signals output from the operating unit 26 on the basis of operations performed by an operator are input to the control computing unit 15.

The operator performs settings of conditions that require to start measurement by the three-dimensional surveying device 1, using the operating unit 26. Examples of settings of conditions that require include setting of the measurement range, setting of density (pitch) of point cloud data, setting of image-capturing conditions for when performing image capturing. For example, settings conditions that are input through the operating unit 26 are displayed on the display unit 25. Thus, the operator can confirm, on the display unit 25, for example, the settings conditions, input through the operating unit 26. Note that the operating unit 26 and the display unit 25 may be provided on the frame unit 5, or may be provided independently from the frame unit 5 and be remotely operable by a signal transmission medium such as wireless, infrared.

The control computing unit 15 drives the ranging light source unit 31, the horizontal drive motor 12, and the vertical drive motor 28, and also controls the display unit 25 that displays, for example, state of work, measurement results. Also, an external storage device 46 such as a memory card, a hard disk drive (HDD), a solid-state drive (SSD), is provided to the control computing unit 15. The external storage device 46 may be fixedly provided to the control computing unit 15, or may be provided so as to be detachably mountable.

The control computing unit 15 has a computing portion 47, a storage portion 48, a ranging light generating drive portion 49 that controls light generation by the ranging light source unit 31, the horizontal drive portion 13 that performs driving control of the horizontal drive motor 12, and the vertical drive portion 17 that performs driving control of the vertical drive motor 28. The control computing unit 15 also has a distance data processing portion 51 that processes distance data obtained by the ranging unit 22, and an image data processing portion 52 that processes image data obtained by the image-capturing unit 23.

The computing portion 47 is, for example, a central processing unit (CPU), and executes activation of programs, control processing of signals, computation, driving control of the display unit 25, etc., on the basis of signals (instructions) transmitted from the operating unit 26. That is to say, the computing portion 47 controls the entirety of the three-dimensional surveying device 1, and also displays, on the display unit 25, for example, surveying conditions, measurement results (ranging results and angle measurement results), results of image processing (collimation range images).

The storage portion 48 stores programs such as a sequence program that causes execution of ranging, measurement of vertical angle, and measurement of horizontal angle, a computation program that performs computation of ranging, a measurement data processing program that executes processing of measurement data, an image-capturing program that controls the state of image capturing by the image-capturing unit 23, an image processing program that executes image processing, an image display program that causes data to be displayed on the display unit 25, or a program that centrally manages these programs. The storage portion 48 also stores data such as measurement data, image data.

Examples of the storage portion 48 include semiconductor memory that is built into the three-dimensional surveying device 1. Alternatively, examples of the storage portion 48 include various types of storage media that are connectable to the three-dimensional surveying device 1, such as compact discs (CDs), digital versatile discs (DVDs), random access memory (RAM), read-only memory (ROM), hard disks, memory cards.

The ranging light generating drive portion 49, the horizontal drive portion 13, the vertical drive portion 17, the distance data processing portion 51, and the image data processing portion 52 are performed by the computing portion 47 executing the programs stored in the storage portion 48. Note that the ranging light generating drive portion 49, the horizontal drive portion 13, the vertical drive portion 17, the distance data processing portion 51, and the image data processing portion 52 may be performed by hardware, or may be performed by a combination of hardware and software.

The program that is executed by a computer including the control computing unit 15 is an example of a "three-dimensional surveying device driving program" according to the present invention. The term "computer" as used here is not limited to personal computers but rather includes computation processing devices contained in information processing equipment, microcontrollers, and is a comprehensive term referring to equipment and devices that are capable of realizing the functions of the present invention through the program.

Note that the computing portion 47 may have functions of the distance data processing portion 51 and of the image data processing portion 52. In this case, the distance data processing portion 51 and the image data processing portion 52 do not necessarily have to be provided.

Also, the distance data processing portion 51 and the image data processing portion 52 may be provided separately from the control computing unit 15. For example, a personal computer that is separate from the control computing unit 15 may execute the functions of the distance data processing portion 51 and the image data processing portion 52. In this case, for example, distance data and image data are transmitted from the three-dimensional surveying device 1 to the personal computer, through communication means provided to the three-dimensional surveying device 1 and the personal computer. The personal computer then executes distance data processing and image data processing. Examples of the communication means include communication means such as optical communication, wireless communication, local area network (LAN).

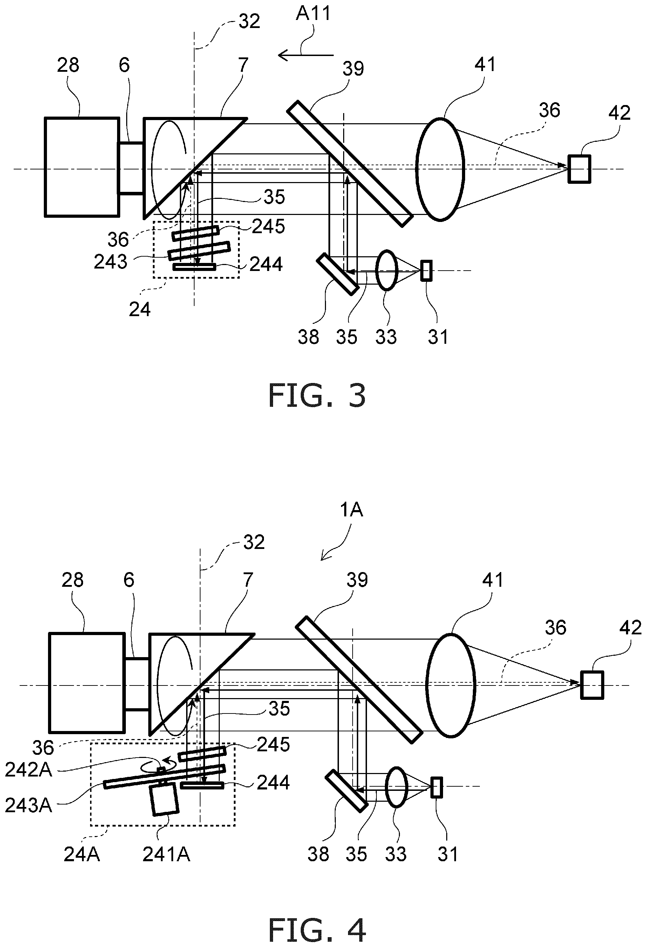

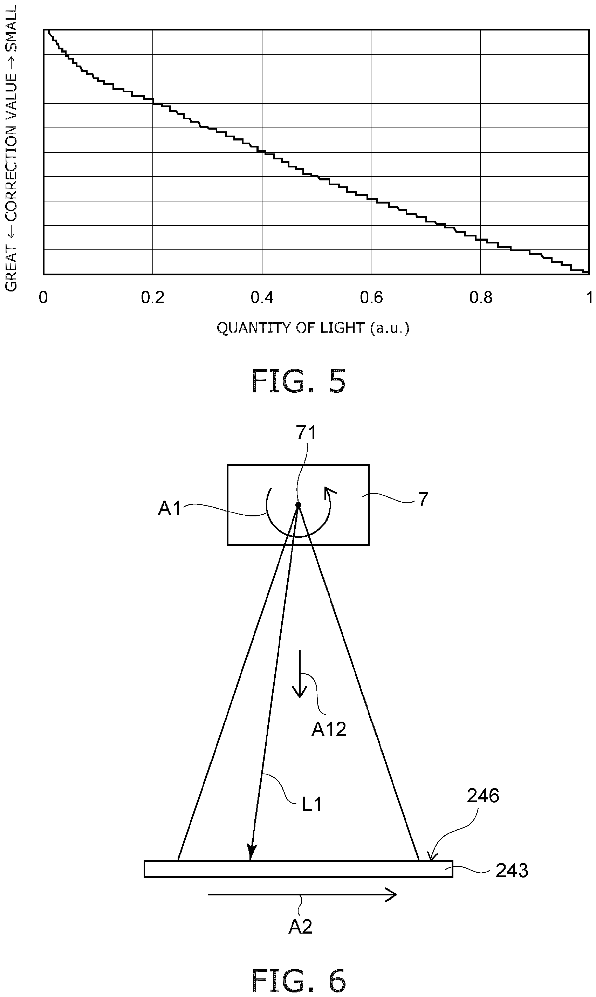

FIG. 3 is a diagram for describing the reference light optical unit according to the present embodiment. FIG. 4 is a diagram for describing a reference light optical unit of a three-dimensional surveying device according to a comparative example of the present embodiment. FIG. 5 is a graph exemplifying an example of a relation between quantity of light and correction values. Note that the image-capturing unit 23 is omitted from FIG. 3 for the sake of convenience in description.

First, a reference light optical unit 24A of a three-dimensional surveying device 1A according to the comparative example of the present embodiment will be described with reference to FIG. 4. Out of the emission range of the ranging light 35, the reference light optical unit 24A of the three-dimensional surveying device 1A according to the present comparative example is provided in a range other than the measurement range, and receives and also reflects the ranging light 35 reflected at the scanning mirror 7 as the internal reference light 36. The reference light optical unit 24A is also capable of changing the quantity of light of the internal reference light 36 to be reflected.

Describing this in detail, the reference light optical unit 24A has a motor 241A, a concentration-gradient-imparted filter 243A, a reflecting sheet 244, and a filter 245. The motor 241A has a shaft 242A, and generates rotational force. The concentration-gradient-imparted filter 243A is supported by the shaft 242A of the motor 241A, and is provided so as to be rotatable about the shaft 242A of the motor 241A under the rotational force transmitted from the motor 241A.

Optical concentration of the concentration-gradient-imparted filter 243A changes in the circumferential direction. In other words, the concentration-gradient-imparted filter 243A is provided with a concentration gradient in which the optical concentration thereof changes in the circumferential direction. The optical concentration of the concentration-gradient-imparted filter 243A does not necessarily have to increase or decrease in order in the circumferential direction, and it is sufficient for there to be change in the circumferential direction.

When the concentration-gradient-imparted filter 243A rotates by the rotational force transmitted from the motor 241A, the optical concentration of a region of the concentration-gradient-imparted filter 243A through which the internal reference light 36 is transmitted changes. Accordingly, the transmissivity of the internal reference light 36 with respect to the concentration-gradient-imparted filter 243A is variable.

The reflecting sheet 244 is provided on the opposite side of the concentration-gradient-imparted filter 243A from the scanning mirror 7, and reflects the ranging light 35 that is transmitted through the concentration-gradient-imparted filter 243A. At this time, the reflecting sheet 244 performs retroreflection of the internal reference light 36. Accordingly, a collimation is no need, unlike cases in which the internal reference light 36 is reflected by prisms or mirrors. Hence, the trouble of collimation can be spared.

The filter 245 is provided between the scanning mirror 7 and the concentration-gradient-imparted filter 243A, and is made of glass, for example. The optical concentration of the filter 245 is fixed, and does not change over the entirety of the filter 245. The filter 245 can adjust variance in quantity of light of the internal reference light 36 that occurs due to variance in the three-dimensional surveying device 1A. Also, the filter 245 can suppress the internal reference light 36 from being reflected at a surface of the concentration-gradient-imparted filter 243A. Note that the filter 245 does not necessarily have to be provided.

The ranging light 35 that is reflected at the scanning mirror 7 and that has been transmitted through the filter 245 and the concentration-gradient-imparted filter 243A is reflected at the reflecting sheet 244. The internal reference light 36 that has been reflected at the reflecting sheet 244 is transmitted through the concentration-gradient-imparted filter 243A and the filter 245, and is reflected at the scanning mirror 7.

The three-dimensional surveying device 1A according to the comparative example adjusts and fixes the rotational angle of the scanning mirror 7 before starting acquisition operations of three-dimensional data (i.e., scanning operations), and emits the ranging light 35 toward the reference light optical unit 24A. That is to say, the ranging light 35 serving as the internal reference light 36 continues to be emitted to the reference light optical unit 24A before the scanning operation. Also, the three-dimensional surveying device 1A according to the comparative example rotates the concentration-gradient-imparted filter 243A by the rotational force transmitted from the motor 241A.

Accordingly, when the internal reference light 36 is transmitted through the concentration-gradient-imparted filter 243A, the optical concentration of the region of the concentration-gradient-imparted filter 243A through which the internal reference light 36 is transmitted changes. That is to say, when the internal reference light 36 is transmitted through the concentration-gradient-imparted filter 243A, the transmissivity of the internal reference light 36 with respect to the concentration-gradient-imparted filter 243A changes. Accordingly, internal reference lights 36 of mutually-differing quantities of light are guided to the scanning mirror 7 and acquired. The internal reference light 36 reflected at the scanning mirror 7 is transmitted through the second beam splitter 39 and guided to the photoreceptor 42.

Accordingly, the three-dimensional surveying device 1A according to the comparative example acquires, with respect to a known distance, a relation between the quantity of light of the internal reference light 36 and the correction value relating to distance, as can be seen in the graph shown in FIG. 5. That is to say, the three-dimensional surveying device 1A according to the comparative example acquires a correction value in accordance with quantity of light for the known distance. In the graph shown in FIG. 5, when the quantity of light is relatively great, the correction value is relatively great. The three-dimensional surveying device 1A according to the comparative example then stores a table of correction values in accordance with quantity of light for the known distance in the storage portion 48 (see FIG. 2).

Thereafter, the three-dimensional surveying device 1A according to the comparative example stops rotation of the concentration-gradient-imparted filter 243A and starts scanning operations, and performs correction of distance values in accordance with the quantity of light of the reflected ranging light 37 that is the ranging light 35 reflected at the measurement object, using the table stored in the storage portion 48, i.e., using the table of correction values in accordance with the quantity of light.

Now, the correction values relating to distance acquired prior to scanning operations (see FIG. 5) may change in accordance with the warmup state of the three-dimensional surveying device 1A, for example. Accordingly, the three-dimensional surveying device 1A according to the comparative example updates a correction value for offsetting the correction value at a timing of the laser beam being transmitted through the concentration-gradient-imparted filter 243A during scanning operations. However, the three-dimensional surveying device 1A according to the comparative example does not perform reacquisition of the table of correction values in accordance with the quantity of light during scanning operations.

Conversely, with the three-dimensional surveying device 1 according to the present embodiment, out of the emission range of the ranging light 35, the reference light optical unit 24 is provided in a range outside of the measurement range as illustrated in FIG. 3, and receives and also reflects the ranging light 35 reflected at the scanning mirror 7 as the internal reference light 36. Also, the reference light optical unit 24 has a concentration-gradient-imparted filter 243 instead of the motor 241A and the concentration-gradient-imparted filter 243A.

The concentration-gradient-imparted filter 243 is fixed at a predetermined position of the reference light optical unit 24. Optical concentration of the concentration-gradient-imparted filter 243 changes along a scanning line of the internal reference light 36, in the region at which the internal reference light 36 is transmitted. In other words, the optical concentration of the concentration-gradient-imparted filter 243 changes along a path of the internal reference light 36 being transmitted through the concentration-gradient-imparted filter 243. Other structures are the same as the structures of the three-dimensional surveying device 1A according to the comparative example described above with reference to FIG. 4.

With the three-dimensional surveying device 1 according to the present embodiment, the internal reference light 36 is transmitted through all optical concentrations of the concentration-gradient-imparted filter 243 that changes along the scanning line of the internal reference light 36, each time the scanning mirror 7 makes one rotation during scanning operations, i.e., each time rotational emission of the ranging light 35 is performed by the scanning mirror 7 during scanning operations. Accordingly, the three-dimensional surveying device 1 according to the present embodiment can acquire a table of correction values in accordance with the quantity of light, each time the scanning mirror 7 makes one rotation during scanning operations. An example of the table of correction values in accordance with the quantity of light, i.e., an example of the graph showing the relation between the quantity of light of the internal reference light 36 and the correction values relating to the distance, is the same as that described above with reference to FIG. 5.

The three-dimensional surveying device 1 according to the present embodiment then stores, in the storage portion 48, the table of correction values in accordance with the quantity of light for the known distance, each time the scanning mirror 7 makes one rotation during scanning operations. Accordingly, the three-dimensional surveying device 1 according to the present embodiment can perform correction of measured distance values in accordance with the quantity of light of the reflected ranging light 37, using a refined table each time the scanning mirror 7 makes one rotation, and thereby improve ranging precision of scanning.

Also, a drive unit is no need, such as the motor 241A and so forth described above with reference to FIG. 4. That is to say, the mechanism and structure for driving the concentration-gradient-imparted filter 243 are eliminated. Accordingly, the three-dimensional surveying device 1 according to the present embodiment can perform simplification of the structure and reduction in size of the device.

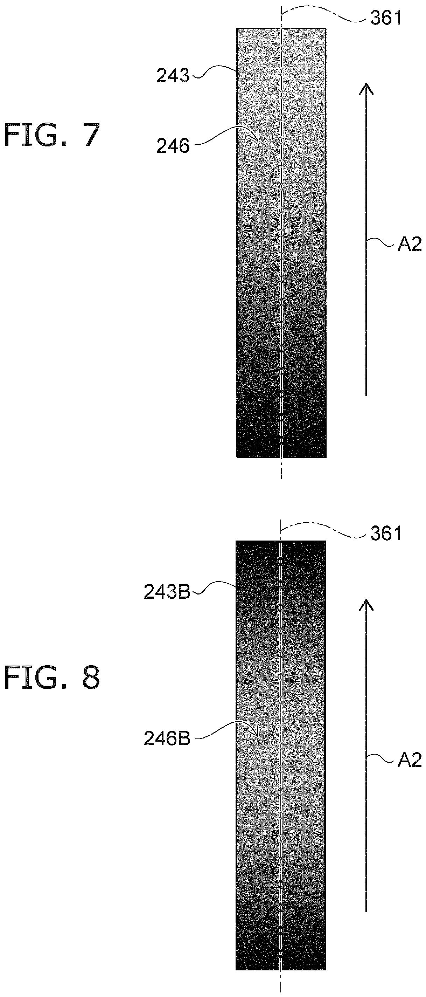

Next, a specific example of the concentration-gradient-imparted filter according to the present embodiment will be described with reference to the drawings. FIG. 6 is a schematic diagram for describing a concentration-gradient-imparted filter according to a first specific example. FIG. 7 is a plan view illustrating the concentration-gradient-imparted filter according to the first specific example. Note that FIG. 6 is a plan view of the scanning mirror 7 and the concentration-gradient-imparted filter 243 as viewed along a direction of arrow A11 in FIG. 3. FIG. 7 is a plan view of the concentration-gradient-imparted filter 243 as viewed along arrow A12 in FIG. 6.

As illustrated in FIG. 6, a surface 246 of the concentration-gradient-imparted filter 243 through which the internal reference light 36 is transmitted is a flat plane in the present specific example. As illustrated in FIG. 7, the optical concentration of the concentration-gradient-imparted filter 243 changes along a scanning line 361 of the internal reference light 36 in the region through which the internal reference light 36 is transmitted. Specifically, the optical concentration of the concentration-gradient-imparted filter 243 has a gradient in which the quantity of light of the internal reference light 36 that is transmitted through the concentration-gradient-imparted filter 243 gradually increases in a scanning direction A2 of the internal reference light 36.

The scanning line 361 is equivalent to the path at which the internal reference light 36 is transmitted through the surface 246 of the concentration-gradient-imparted filter 243, when the scanning mirror 7 rotates in the vertical direction about the vertical rotation shaft 6 (see FIG. 1), as indicated by arrow A1 in FIG. 6.

The gradient of the optical concentration on the surface 246 (i.e., flat plane) of the concentration-gradient-imparted filter 243 may be constant, or may change along the scanning line 361 of the internal reference light 36. For example, the gradient of the optical concentration on the surface 246 of the concentration-gradient-imparted filter 243 may change in accordance with a distance L1 between a portion 71 (see FIG. 6) where the ranging light 35 is reflected at the scanning mirror 7, and the portion where the internal reference light 36 is transmitted through the surface 246 of the concentration-gradient-imparted filter 243.

According to the present specific example, the surface 246 of the concentration-gradient-imparted filter 243 through which the internal reference light 36 is transmitted is a flat plane, and accordingly simplification of the structure and reduction in size of the concentration-gradient-imparted filter 243 can be performed. Thus, simplification of the structure and reduction in size of the three-dimensional surveying device 1 can be performed.

Also, the optical concentration of the concentration-gradient-imparted filter 243 has a gradient in which the quantity of light of the internal reference light 36 that is transmitted through the concentration-gradient-imparted filter 243 gradually increases in the scanning direction A2 of the internal reference light 36. Accordingly, a situation in which a relatively great quantity of light of the internal reference light 36 enters the photoreceptor 42 at an initial stage of the internal reference light 36 being transmitted through the concentration-gradient-imparted filter 243 can be suppressed, and a situation in which a relatively great quantity of light is retained in circuits such as the control computing unit 15 can be suppressed. Thus, precision of the table of correction values in accordance with the quantity of light can be improved and the ranging precision of scanning can be improved in the three-dimensional surveying device 1 that has the concentration-gradient-imparted filter 243 according to the present specific example.

Further, in a case in which the gradient of the optical concentration on the flat plane of the concentration-gradient-imparted filter 243 changes in accordance with the distance L1 between the portion 71 where the ranging light 35 is reflected at the scanning mirror 7, and the portion where the internal reference light 36 is transmitted through the surface 246 of the concentration-gradient-imparted filter 243, the rectilinearity or the linearity of the table of correction values in accordance with the quantity of light can be improved.

FIG. 8 is a plan view illustrating a concentration-gradient-imparted filter according to a second specific example. Note that FIG. 8 is equivalent to a plan view of a concentration-gradient-imparted filter 243B according to the present specific example as viewed along arrow A12 in FIG. 6.

In the present specific example, a surface 246B of the concentration-gradient-imparted filter 243B through which the internal reference light 36 is transmitted is a flat plane, in the same way as the surface 246 of the concentration-gradient-imparted filter 243 according to the first specific example described above with reference to FIG. 7. As illustrated in FIG. 8, the optical concentration of the concentration-gradient-imparted filter 243B according to the present specific example has a gradient in which the quantity of light of the internal reference light 36 that is transmitted through the concentration-gradient-imparted filter 243B gradually increases in the scanning direction A2 of the internal reference light 36, and thereafter decreases.

Specifically, as viewed along the scanning direction A2 of the internal reference light 36, the quantity of light of the internal reference light 36 that is transmitted through the concentration-gradient-imparted filter 243B is relatively small at the initial stage, is relatively great in the intermediate stage (i.e., the stage at which the internal reference light 36 is transmitted through the middle portion of the concentration-gradient-imparted filter 243B), and becomes relatively small again at the latter stage. Other structures are the same as those of the concentration-gradient-imparted filter 243 according to the first specific example described above with reference to FIGS. 6 and 7.

According to the present specific example, a situation in which a relatively great quantity of light of the internal reference light 36 enters the photoreceptor 42 at the initial stage of the internal reference light 36 being transmitted through the concentration-gradient-imparted filter 243B can be suppressed, and a situation in which a relatively great quantity of light is retained in circuits such as the control computing unit 15 can be suppressed. Also, a situation in which a relatively great quantity of light of the internal reference light 36 enters the photoreceptor 42 at the latter stage of the internal reference light 36 being transmitted through the concentration-gradient-imparted filter 243B can be suppressed, and a situation in which a relatively great quantity of light is retained in circuits such as the control computing unit 15 can be suppressed. Thus, when the scanning mirror 7 emits the ranging light 35 serving as the internal reference light 36 to the reference light optical unit 24 in the subsequent rotation, a situation in which a relatively great quantity of light remains retained in circuits such as the control computing unit 15 can be suppressed. Accordingly, precision of the table of correction values in accordance with the quantity of light can be improved even further, and the ranging precision of scanning can be improved even further.

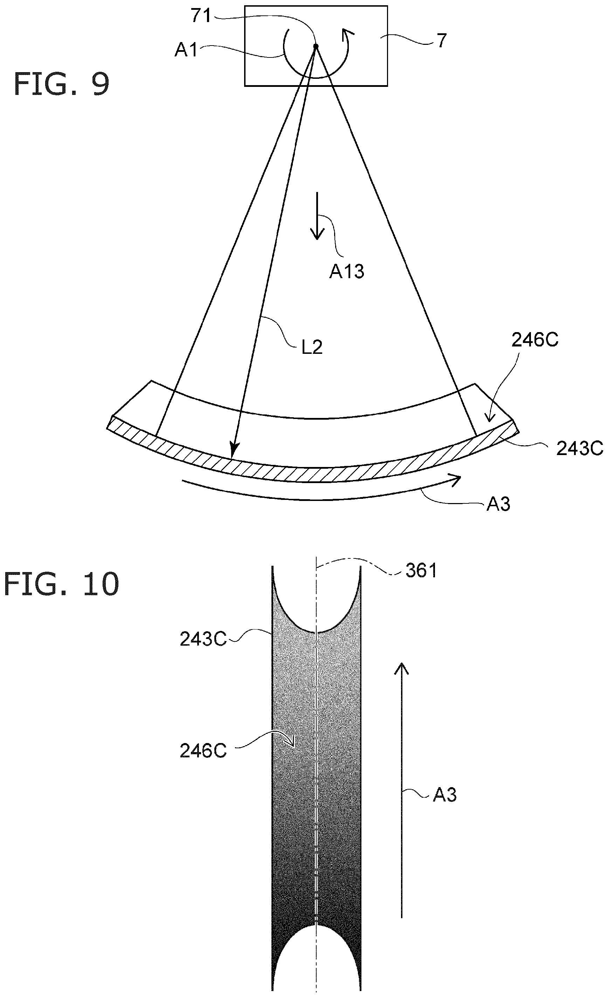

FIG. 9 is a schematic diagram for describing a concentration-gradient-imparted filter according to a third specific example. FIG. 10 is a plan view illustrating the concentration-gradient-imparted filter according to the third specific example. Note that FIG. 9 is equivalent to a plan view of the scanning mirror 7 and a concentration-gradient-imparted filter 243C as viewed along the direction of arrow A11 in FIG. 3. FIG. 10 is a plan view of the concentration-gradient-imparted filter 243C as viewed along arrow A13 in FIG. 9.

As illustrated in FIG. 9, a surface 246C of the concentration-gradient-imparted filter 243C through which the internal reference light 36 is transmitted is a spherical face in the present specific example. Specifically, the surface 246C of the concentration-gradient-imparted filter 243C is a spherical face in which a distance L2 between a portion 71 where the ranging light 35 is reflected at the scanning mirror 7, and a portion where the internal reference light 36 is transmitted through the surface 246C of the concentration-gradient-imparted filter 243C, is constant.

As illustrated in FIG. 10, the optical concentration of the concentration-gradient-imparted filter 243C changes along the scanning line 361 of the internal reference light 36 in a region through which the internal reference light 36 is transmitted. Specifically, the optical concentration of the concentration-gradient-imparted filter 243C has a gradient in which the quantity of light of the internal reference light 36 that is transmitted through the concentration-gradient-imparted filter 243C gradually increases in a scanning direction A3 of the internal reference light 36. The gradient of the optical concentration of the surface 246C (i.e., spherical face) of the concentration-gradient-imparted filter 243C is constant.

Note that the optical concentration of the concentration-gradient-imparted filter 243C may have a gradient in which the quantity of light of the internal reference light 36 that is transmitted through the concentration-gradient-imparted filter 243C gradually increases in the scanning direction A3 of the internal reference light 36, and thereafter decreases, in the same way as the concentration-gradient-imparted filter 243B according to the second specific example described above with reference to FIG. 8.

According to the present specific example, the surface 246C of the concentration-gradient-imparted filter 243C through which the internal reference light 36 is transmitted is a spherical face in which the distance L2 between the portion 71B where the ranging light 35 is reflected at the scanning mirror 7, and a portion where the internal reference light 36 is transmitted through the surface 246C of the concentration-gradient-imparted filter 243C, is constant, and accordingly the rectilinearity or the linearity of the table of correction values in accordance with the quantity of light can be improved. Also, the gradient of optical concentration on the spherical surface of the concentration-gradient-imparted filter 243C is constant, and accordingly the rectilinearity or the linearity of the table of correction values in accordance with the quantity of light can be improved even further.

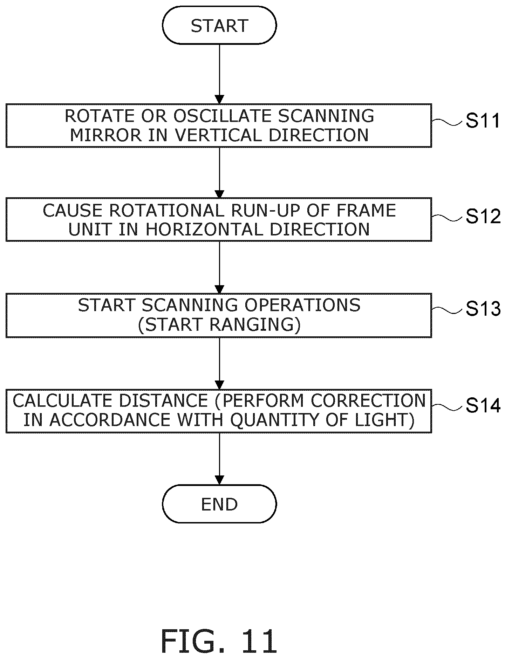

Next, calculation processing of distance to a measurement object (measurement processing) will be described with reference to the drawings. FIG. 11 is a flowchart exemplifying distance calculation processing of the three-dimensional surveying device according to the present embodiment.

First, in step S11, the control computing unit 15 causes the scanning mirror 7 to rotate or oscillate in the vertical direction, thereby emitting the ranging light 35 to the reference light optical unit 24 as the internal reference light 36. Thus, the internal reference light 36 is transmitted through the entirety of optical concentration of the concentration-gradient-imparted filter 243 that changes along the scanning line of the internal reference light 36.

The internal reference light 36 that is received and reflected at the reference light optical unit 24 is reflected at the scanning mirror 7, transmitted through the second beam splitter 39, and guided to the photoreceptor 42. Then, on the basis of the internal reference light (internal light) 36 that is received by the photoreceptor 42, the distance data processing portion 51 calculates internal light distance. That is to say, the distance data processing portion 51 performs processing of internal light distance data on the basis of the internal reference light 36 that is received by the photoreceptor 42 and that is converted into internal reference light electrical signals. Accordingly, the three-dimensional surveying device 1 can acquire, and store in the storage portion 48, the table of correction values in accordance with the quantity of light with respect to the known distance, each time the internal reference light 36 is transmitted through the entirety of optical concentration of the concentration-gradient-imparted filter 243 that changes along the scanning line 361 of the internal reference light 36.

Once a predetermined data amount regarding the table of correction values in accordance with the quantity of light is stored in the storage portion 48, in step S12 following step S11, the control computing unit 15 rotates the frame unit 5 in the horizontal direction as a run-up. By executing the processing of step S12, the three-dimensional surveying device 1 can stabilize the rotational speed of the frame unit 5 in the horizontal direction, can make the density (pitch) of point cloud data acquired by a later-described scanning operation to be more uniform, and suppress coarse and fine places from being created in the intervals of the point cloud data.

Note that the above-described processing regarding step S11, i.e., the processing of acquiring the table of correction values in accordance with the quantity of light with respect to the known distance, and storing the table in the storage portion 48, may be executed in step S12. That is to say, the processing of step S11 and step S12 may be executed simultaneously.

Next, in step S13, the control computing unit 15 controls the scanning mirror 7 and emits the ranging light 35 to the measurement object, and also emits the ranging light 35 to the reference light optical unit 24 as the internal reference light 36. That is to say, the control computing unit 15 rotates the scanning mirror 7 in the vertical direction and also rotates the frame unit 5 in the horizontal direction, and starts the scanning operation.

The reflected ranging light 37 that is reflected at the measurement object is reflected at the scanning mirror 7, and is transmitted through the second beam splitter 39 and guided to the ranging unit 22. Then, on the basis of the reflected ranging light (external light) 37 received by the photoreceptor 42, the distance data processing portion 51 calculates external light distance. That is to say, the distance data processing portion 51 performs processing of external light distance data on the basis of the reflected ranging light 37 that is received by the photoreceptor 42 and that is converted into reflected ranging light electrical signals.

Also, as described above regarding step S11, the distance data processing portion 51 calculates the internal light distance on the basis of the internal reference light (internal light) 36 received by the photoreceptor 42. Accordingly, the three-dimensional surveying device 1 can acquire the table of correction values in accordance with the quantity of light with respect to the known distance, and store the table in the storage portion 48, each time the scanning mirror 7 makes one rotation during scanning operations.

Subsequently, in step S14, the distance data processing portion 51 calculates the distance to the measurement object on the basis of the internal light distance data stored in the storage portion 48, and the external light distance data. That is to say, the distance data processing portion 51 corrects the external light distance data in accordance with the quantity of light of the reflected ranging light 37, using the refined table stored in the storage portion 48, and calculates the distance to the measurement object.

An embodiment of the present invention has been described above. However, the present invention is not limited to the above embodiment, and various modifications can be made without departing from the scope of the Claims. The configurations of the above embodiment can be omitted in part thereof, or optionally combined in a different manner from that described above.

## Claims

1. A three-dimensional surveying device that emits ranging light to a measurement object and measures a distance to the measurement object on the basis of reflected ranging light that is the ranging light reflected at the measurement object and of internal reference light, and also detects an emission direction of the ranging light, thereby acquiring three-dimensional data of the measurement object, the three-dimensional surveying device comprising:
a light source unit that discharges the ranging light;
a projected light optical unit that emits the ranging light discharged from the light source unit onto a ranging optical axis;
a scanning mirror that is provided so as to be capable of rotating about a rotation shaft in a state of being inclined as to a shaft center of the rotation shaft, and that performs rotational emission of the ranging light guided from the projected light optical unit in a plane that intersects the rotation shaft;
a light-receiving optical unit that receives the reflected ranging light reflected at the measurement object and guided by the scanning mirror;
a reference light optical unit that, out of an emission range in which rotational emission of the ranging light is performed by the scanning mirror, is provided in a range other than a measurement range in which the ranging light is emitted to the measurement object, and that receives and also reflects the ranging light reflected at the scanning mirror as the internal reference light, and that is capable of changing quantity of light of the internal reference light to be reflected; and
a photoreceptor that receives the reflected ranging light and the internal reference light guided from the reference light optical unit, wherein
the reference light optical unit has
a concentration-gradient-imparted filter in which optical concentration of a region through which the internal reference light is transmitted changes along a scanning line of the internal reference light, and
a reflecting sheet that performs retroreflection of the internal reference light transmitted through the concentration-gradient-imparted filter.

2. The three-dimensional surveying device according to claim 1, wherein a surface of the concentration-gradient-imparted filter through which the internal reference light is transmitted is a flat plane.

3. The three-dimensional surveying device according to claim 2, wherein a gradient of the optical concentration on the flat plane changes in accordance with a distance between a portion where the ranging light is reflected at the scanning mirror, and a portion where the internal reference light is transmitted through the surface.

4. The three-dimensional surveying device according to claim 1, wherein a surface of the concentration-gradient-imparted filter through which the internal reference light is transmitted is a spherical face in which a distance between a portion where the ranging light is reflected at the scanning mirror, and a portion where the internal reference light is transmitted through the surface, is constant.

5. The three-dimensional surveying device according to claim 4, wherein a gradient of the optical concentration on the spherical face is constant.

6. The three-dimensional surveying device according to claim 1, wherein the optical concentration has a gradient in which quantity of light of the internal reference light that is transmitted through the concentration-gradient-imparted filter gradually increases in a scanning direction of the internal reference light.

7. The three-dimensional surveying device according to claim 1, wherein the optical concentration has a gradient in which quantity of light of the internal reference light that is transmitted through the concentration-gradient-imparted filter gradually increases in a scanning direction of the internal reference light, and thereafter decreases.
